# EUROPEAN PATENT APPLICATION

(11) **EP 3 779 651 A1**
(43) Date of publication of application: **17.02.2021**
(21) Application number: 19775723.0
(22) Date of filing: 28.03.2019
(51) Int. Cl.: G06F 3/033

(54) **DISPLAY METHOD, DISPLAY SYSTEM, AND VEHICLE**

(30) Priority: 30.03.2018 CN 201810277756
(71) Applicant: BYD Company Limited, Guangdong 518118 (CN)
(72) Inventor: HUANG, Hua, Shenzhen, Guangdong 518118 (CN); XU, Liming, Shenzhen, Guangdong 518118 (CN); LIANG, Qun, Shenzhen, Guangdong 518118 (CN); WU, Chunfen, Shenzhen, Guangdong 518118 (CN); ZHONG, Yilin, Shenzhen, Guangdong 518118 (CN)
(74) Representative: Haseltine Lake Kempner LLP
(86) International application number: PCT/CN2019/080084
(87) International publication number: WO 2019/184974

(57) **Abstract**

The present disclosure discloses a display method, a display system, and a vehicle. The display method includes: adding a target application identifier in a plurality of application identifiers in a first area on a display screen to a target position area in a second area, where each of the application identifiers corresponds to one weight value; sending a widget information invoking request to a corresponding application according to a weight value of the target application identifier; feeding back, by the application, an access address corresponding to the application if no widget information is invoked; and extracting widget information of the application according to the access address, and displaying the widget information in the target position area. According to the display method of the present disclosure, a widget of any application can be invoked as required, thereby quickly accessing the application.

## Description

### CROSS-REFERENCE TO RELATED APPLICATIONS

The present disclosure claims priority to Chinese Patent Application No. 201810277756.9 filed on March 30, 2018, which is incorporated herein by reference in its entirety.

### FIELD

The present disclosure relates to the technical field of automobiles, and in particular, to a display method, a display system, and a vehicle.

### BACKGROUND

In the related art, a uniform interest layer of a user interface is also referred to as a user-activatable operation screen, and includes any number of user interface elements referred to as a "widget" herein for users to quickly access applications. A specific operation is as follows: in response to a command of a user, an operation screen is invoked, and widgets are displayed on the screen. The user may activate the operation screen at any time, so that the operation screen temporarily replaces an existing user interface display on a user screen. Once the operation screen is activated, the user may interact with some or all of the widgets, and may configure the operation screen by adding, deleting, moving, or configuring desired personal widgets. When the user wishes to return to a normal user interface he or she ever used, the user sends a command to cancel the operation screen. Once the operation screen is cancelled, a previous user interface state is restored.

Disadvantages are as follows.

If an application is not configured with corresponding widgets, the user cannot quickly access the application by adding widgets. In other words, the above uniform interest layer of the user interface is merely switching between "widgets" (for example, add, move, and delete), that is, switching between "widgets" can be performed only when the application has widgets. Therefore, applications without widgets still cannot be quickly accessed, affecting user experience.

### SUMMARY

The present disclosure is intended to resolve at least one of the technical problems in the related art to some extent.

To this end, a purpose of the present disclosure is to propose a display method. According to the method, a widget of any application can be invoked as required, thereby quickly accessing the application.

Another purpose of the present disclosure is to propose a display system.

Still another purpose of the present disclosure is to propose a vehicle.

In order to achieve the above purposes, an embodiment of a first aspect of the present disclosure discloses a display method, including the following steps: adding a target application identifier in a plurality of application identifiers in a first area on a display screen to a target position area in a second area, where each of the application identifiers corresponds to one weight value; sending a widget information invoking request to a corresponding application according to a weight value of the target application identifier; feeding back, by the application, an access address corresponding to the application if no widget information is invoked; and extracting widget information of the application according to the access address, and displaying the widget information in the target position area.

According to the display method of the present disclosure, whether the application has a widget is automatically identified. When the application has no widget, a link channel corresponding to the application may be automatically generated, so as to relieve a case that some applications have no widgets for displaying and the applications cannot be quickly operated through widgets. Switching between the application and the widget can be achieved. Even when the application has no widget, widget information may also be obtained by automatically generating a link channel corresponding to the application so as to generate widgets. In this way, a user can invoke a widget of any application as required, so as to quickly access the application.

In order to achieve the above purposes, an embodiment of a second aspect of the present disclosure discloses a display system, including: a display screen configured to add a target application identifier in a plurality of application identifiers in a first area on the display screen to a target position area in a second area in response to an instruction of a user, where each of the application identifiers corresponds to one weight value; a processor configured to: send a widget information invoking request to a corresponding application according to a weight value of the target application identifier, and if no widget information is invoked, extract widget information of the application according to an access address corresponding to the application and fed back by the application, and display the widget information in the target position area.

According to the display system of the present disclosure, whether the application has a widget is automatically identified. When the application has no widget, a link channel corresponding to the application may be automatically generated, so as to resolve a problem that some applications have no widgets for displaying and the applications cannot be quickly operated through widgets. Switching between the application and the widget can be achieved. Even when the application has no widget, widget information may also be obtained by automatically generating a link channel corresponding to the application so as to generate widgets. In this way, a user can invoke a widget of any application as required, so as to quickly access the application.

An embodiment of a third aspect of the present disclosure discloses a vehicle, including the display system according to the above embodiment of the second aspect. A display screen of the vehicle can automatically identify whether an application has a widget. When the application has no widget, a link channel corresponding to the application may be automatically generated, so as to resolve a problem that some applications have no widgets for displaying and the applications cannot be quickly operated through widgets. Switching between the application and the widget can be achieved. Even when the application has no widget, widget information may also be obtained by automatically generating a link channel corresponding to the application so as to generate widgets. In this way, a user can invoke a widget of any application as required, so as to quickly access the application.

### BRIEF DESCRIPTION OF THE DRAWINGS

FIG. 1 is a flowchart of a display method according to an embodiment of the present disclosure;
FIG. 2 is a flowchart of a display method according to another embodiment of the present disclosure;
FIG. 3 is a schematic diagram of an initial interface existing when a display screen enters a widget editing mode in a display method according to an embodiment of the present disclosure;
FIG. 4 is a schematic diagram of an interface existing when a display screen enters an editing process of a widget editing mode in a display method according to an embodiment of the present disclosure;
FIG. 5 is a structural block diagram of a display system according to an embodiment of the present disclosure; and
FIG. 6 is a structural block diagram of a vehicle according to an embodiment of the present disclosure

### DETAILED DESCRIPTION

The following describes embodiments of the present disclosure in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are intended to explain the present disclosure and cannot be construed as a limitation to the present disclosure.

A display method, a display system, and a vehicle according to the embodiments of the present disclosure are described below with reference to the drawings.

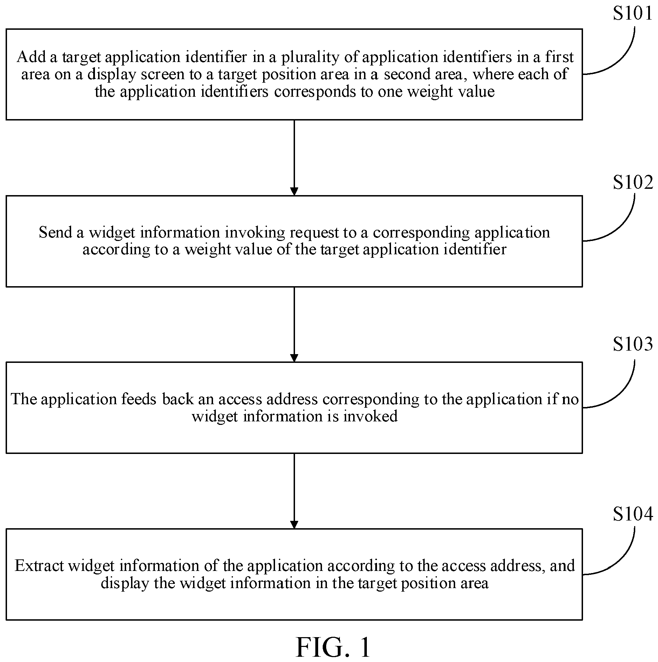

FIG. 1 is a flowchart of a display method according to an embodiment of the present disclosure.

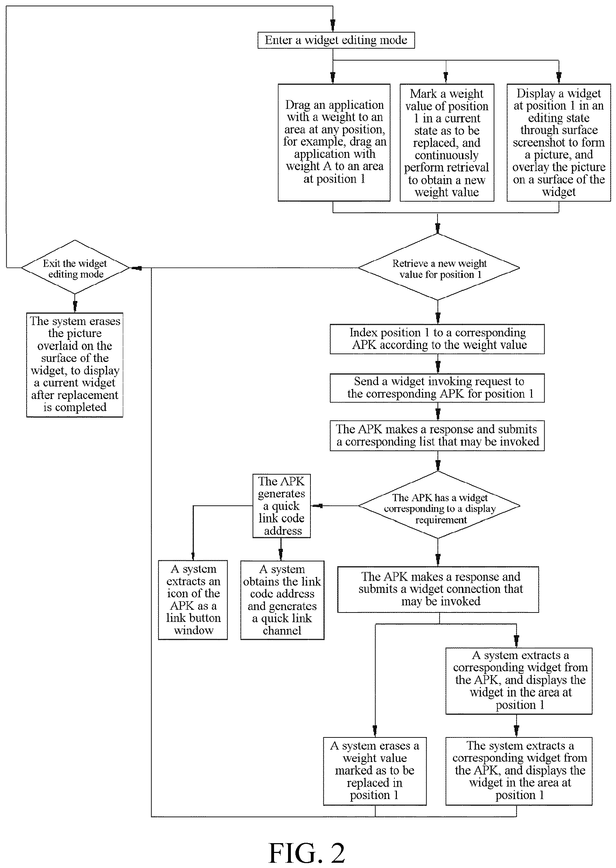

Referring to FIG. 1 and FIG. 2, a display method according to an embodiment of the present disclosure includes the following steps.

S101: Add a target application identifier in a plurality of application identifiers in a first area on a display screen to a target position area in a second area, where each of the application identifiers corresponds to one weight value.

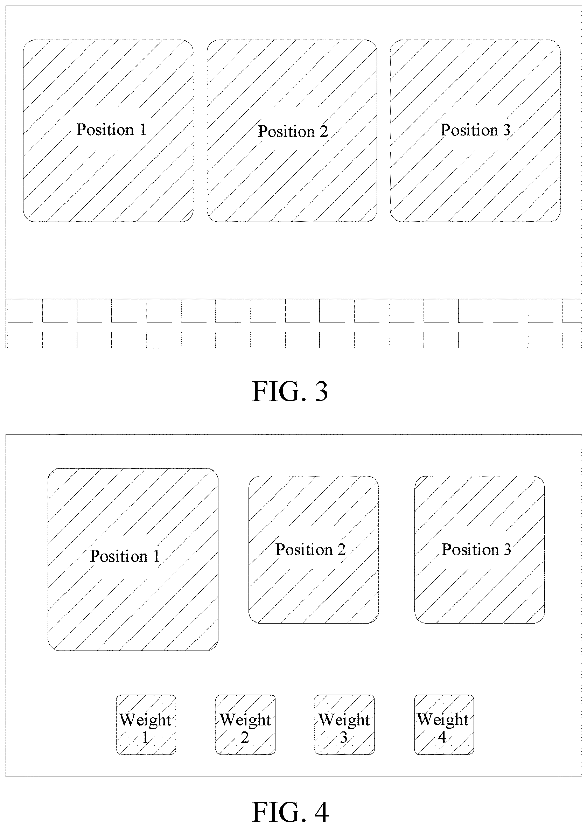

Specifically, a display screen operation is first performed to enter a widget editing mode. As shown in FIG. 3, position 1, position 2, and position 3 represent the three target position areas in the second area.

It should be noted that FIG. 3 shows only three target position areas: position 1, position 2, and position 3. In other examples of the present disclosure, a number of target position areas may vary according to requirements.

A specific operation is as follows. After entering the widget editing mode, a user may touch the target area at position 1 for a specific period of time, so that a plurality of application identifiers are displayed in the first area below the second area. As shown in FIG. 4, four application identifiers: weight 1, weight 2, weight 3, and weight 4 are displayed in the first area. Weight 1, weight 2, weight 3, and weight 4 represent weight values of the four application identifiers. The application identifier may be an icon of the application. The user may drag the application identifier of weight 1 to the target position area at position 1.

It should be noted that FIG. 4 shows only four application identifiers: weigh 1, weight 2, weight 3, and weight 4. In other examples of the present disclosure, a number of application identifiers may be increased or reduced.

A manner of dragging the application identifier of weight 1 to the target position area at position 2 or the target position area at position 3 is similar. Certainly, a manner of dragging the application identifier of weight 2, weight 3, or weight 4 to the target position area at position 1, the target position area at position 2, or the target position area at position 3 is also similar, and details are not described herein again.

S102: Send a widget information invoking request to a corresponding application according to a weight value of the target application identifier.

For example, the application identifier of weight 1 is dragged to the target position area at position 1. With reference to FIG. 2, a weight value of position 1 in a current state is marked as to be replaced, and retrieval is continuously performed to obtain a new weight value. If no new weight value for position 1 is retrieved, the widget editing mode is disabled.

When the application identifier of weight 1 is dragged to the target position area at position 1, the weight value of position 1 in the current state is changed. At this time, a new weight value of position 1 is retrieved (that is, a weight value of weight 1). Position 1 is indexed to a corresponding application according to the new weight value. Then, a widget invoking request (that is, widget information invoking request) is sent to the application for position 1, and the application makes a response and submits a corresponding list that may be invoked.

S103: The application feeds back an access address corresponding to the application if no widget information is invoked.

Specifically, the application submits the invoke list according to the widget information invoking request. If the invoke list does not include the widget information, the application generates an access address, and feeds back the access address. The access address is, but is not limited to a link code address.

Since information of a widget to be displayed is specified, if the invoke list submitted by the application does not include the specified information, a widget cannot be displayed. Therefore, the application generates an address such as a link code address, etc., and then feeds back the link code address.

In the above description, that information of a widget to be displayed is specified may be understood as follows: when the invoke list submitted by the application includes a widget corresponding to display requirements, it is considered that the submitted invoke list includes the specific information. Otherwise, when the invoke list submitted by the application does not include the widget corresponding to the display requirements, it is considered that the submitted invoke list does not include the specific information.

S104: Extract widget information of the application according to the access address, and display the widget information in the target position area.

For example, a link channel is generated according to the link code address, the widget information of the application is extracted through the link channel, the widget information is added to a widget, and the widget information is displayed in the target position area.

In other words, when the application does not have the widget corresponding to the display requirements, the application generates a link code address, and the system may extract an icon of the application as a link button window, and then obtain the link code address, and then generate the link channel. In this way, the system can extract corresponding widget information from the application through the link channel and display the widget information in the area at position 1, and then the system clears the marked weight value to be replaced in position 1.

It should be noted that, before the target application identifier in the plurality of application identifiers in the first area on the display screen is added to the target position area in the second area, a plurality of weight values need to be preconfigured for the plurality of application identifiers in the first area in a one-to-one correspondence. In this way, different applications and application identifiers each correspond to one specific weight value. In this way, a corresponding application may be determined according to a weight value.

With reference to FIG. 2, the display method further includes: feeding back, by the application, an invoke link of the widget information if the widget information is invoked, to extract the widget information of the application according to the invoke link and display the widget information in the target position area.

Still in the example of dragging the application identifier of position 1 to the target position area at position 1, when the application has the widget corresponding to the display requirements, the application makes a response and submits a corresponding widget connection that may be invoked. The system extracts the widget information from the application according to the widget connection that may be invoked, and displays the widget information in the area at position 1. The system loads the weight value of the application identifier of the weight 1 to position 1, and then clears the marked weight value to be replaced at position 1.

According to the display method of this embodiment of the present disclosure, whether the application has a widget is automatically identified. When the application has no widget, a link channel corresponding to the application may be automatically generated, so as to relieve a case that some applications have no widgets for displaying and the applications cannot be quickly operated through widgets. Switching between the application and the widget can be achieved. Even when the application has no widget, widget information may also be obtained by automatically generating a link channel corresponding to the application so as to generate widgets. In this way, a user can invoke a widget of any application as required, so as to quickly access the application.

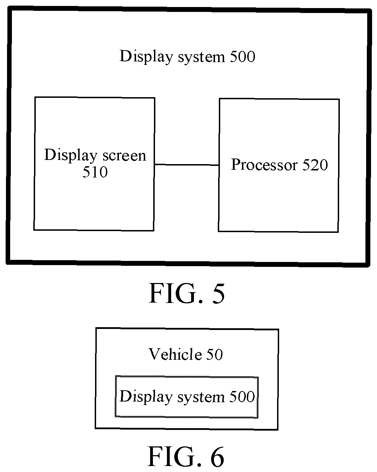

FIG. 5 is a structural block diagram of a display system according to an embodiment of the present disclosure. As shown in FIG. 5, a display system 500 according to an embodiment of the present disclosure includes a display screen 510 and a processor 520.

The display screen 510 is configured to add a target application identifier in a plurality of application identifiers in a first area on a display screen to a target position area in a second area in response to an instruction of a user, where each of the application identifiers corresponds to one weight value. The processor 520 is configured to: send a widget information invoking request to a corresponding application according to a weight value of the target application identifier, and if no widget information is invoked, extract widget information of the application according to an access address corresponding to the application and fed back by the application, and display the widget information in the target position area.

In an embodiment of the present disclosure, the processor 520 is configured to: receive an invoke list submitted by the application according to the widget information invoking request, and if the invoke list does not include the widget information, receive the access address generated by the application.

In an embodiment of the present disclosure, the access address is a link code address.

In an embodiment of the present disclosure, the processor 520 is configured to: generate a link channel according to the link code address, extract the widget information of the application through the link channel, add the widget information to a widget, and display the widget information in the target position area.

In an embodiment of the present disclosure, before the display screen 510 adds the target application identifier in the plurality of application identifiers in the first area on the display screen to the target position area in the second area in response to the instruction of the user, the processor is further configured to preconfigure a plurality of weight values for the plurality of application identifiers in the first area in a one-to-one correspondence.

In an embodiment of the present disclosure, the processor 520 is further configured to: when the widget information is invoked, extract the widget information of the application according to an invoke link of the widget information and fed back by the application, and display the widget information in the target position area.

According to the display system of this embodiment of the present disclosure, whether the application has a widget is automatically identified. When the application has no widget, a link channel corresponding to the application may be automatically generated, so as to resolve a problem that some applications have no widgets for displaying and the applications cannot be quickly operated through widgets. Switching between the application and the widget can be achieved. Even when the application has no widget, widget information may also be obtained by automatically generating a link channel corresponding to the application so as to generate widgets. In this way, a user can invoke a widget of any application as required, so as to quickly access the application.

It should be noted that a specific implementation of the display system of this embodiment of the present disclosure is similar to a specific implementation of the display method of this embodiment of the present disclosure. For details, refer to the descriptions of the method. In order to reduce redundancy, details are not described herein again.

Further, an embodiment of the present disclosure discloses a vehicle. As shown in FIG. 6, a vehicle 50 in this embodiment of the present disclosure includes the display system 500 according to the above embodiment. The display screen of the vehicle can automatically identify whether an application has a widget. When the application has no widget, a link channel corresponding to the application may be automatically generated, so as to resolve a problem that some applications have no widgets for displaying and the applications cannot be quickly operated through widgets. Switching between the application and the widget can be achieved. Even when the application has no widget, widget information may also be obtained by automatically generating a link channel corresponding to the application so as to generate widgets. In this way, a user can invoke a widget of any application as required, so as to quickly access the application, thereby improving use experience of the vehicle.

In addition, other functions and effects of the vehicle according to this embodiment of the present disclosure are known to those of ordinary skill in the art. In order to reduce redundancy, details are not described herein again.

In description of the present disclosure, description of reference terms such as "one embodiment", "some embodiments", "example", "specific example" or "some examples" means including specific features, structures, materials, or features described in this embodiment or example in at least one embodiment or example of the present disclosure. In addition, terms "first" and "second" are only used to describe the objective and cannot be understood as indicating or implying relative importance or implying a quantity of the indicated technical features. Therefore, features defining "first" and "second" can explicitly or implicitly include at least one of the features. In the descriptions of the present disclosure, unless explicitly specified, "multiple" means at least two, for example, two or three.

Although the embodiments of the present disclosure are shown and described above, it can be understood that, the foregoing embodiments are exemplary, and cannot be construed as a limitation to the present disclosure. Within the scope of the present disclosure, a person of ordinary skill in the art may make changes, modifications, replacement, and variations to the foregoing embodiments.

## Claims

1. A display method, comprising the following steps:
adding a target application identifier in a plurality of application identifiers in a first area on a display screen to a target position area in a second area, wherein each of the application identifiers corresponds to one weight value;
sending a widget information invoking request to a corresponding application according to a weight value of the target application identifier;
feeding back, by the application, an access address corresponding to the application if no widget information is invoked; and
extracting widget information of the application according to the access address, and displaying the widget information in the target position area.

2. The display method according to claim 1, wherein the feeding back, by the application, an access address of the application if no widget information is invoked comprises:
submitting, by the application, an invoke list according to the widget information invoking request; and
if the invoke list does not comprise the widget information, generating, by the application, the access address, and feeding back the access address.

3. The display method according to claim 1 or 2, wherein the access address is a link code address.

4. The display method according to claim 3, wherein the extracting widget information of the application according to the access address, and displaying the widget information in the target position area comprises:
generating a link channel according to the link code address;
extracting the widget information of the application through the link channel; and
adding the widget information to a widget, and displaying the widget information in the target position area.

5. The display method according to any of claims 1 to 4, wherein before the adding a target application identifier in a plurality of application identifiers in a first area on a display screen to a target position area in a second area, the display method further comprises: preconfiguring a plurality of weight values for the plurality of application identifiers in the first area in a one-to-one correspondence.

6. The display method according to any of claims 1 to 5, further comprising:
feeding back, by the application, an invoke link of the widget information if the widget information is invoked, to extract the widget information of the application according to the invoke link and display the widget information in the target position area.

7. A display system, comprising:
a display screen configured to add a target application identifier in a plurality of application identifiers in a first area on the display screen to a target position area in a second area in response to an instruction of a user, wherein each of the application identifiers corresponds to one weight value;
a processor configured to: send a widget information invoking request to a corresponding application according to a weight value of the target application identifier, and if no widget information is invoked, extract widget information of the application according to an access address corresponding to the application and fed back by the application, and display the widget information in the target position area.

8. The display system according to claim 7, wherein the processor is configured to: receive an invoke list submitted by the application according to the widget information invoking request, and if the invoke list does not comprise the widget information, receive the access address generated by the application.

9. The display system according to claim 7 or 8, wherein the access address is a link code address.

10. The display system according to claim 9, wherein the processor is configured to: generate a link channel according to the link code address, extract the widget information of the application through the link channel, add the widget information to a widget, and display the widget information in the target position area.

11. The display system according to any of claims 7 to 10, wherein before the display screen adds the target application identifier in the plurality of application identifiers in the first area on the display screen to the target position area in the second area in response to the instruction of the user, the processor is further configured to preconfigure a plurality of weight values for the plurality of application identifiers in the first area in a one-to-one correspondence.

12. The display system according to any of claims 7 to 11, wherein the processor is further configured to: when the widget information is invoked, extract the widget information of the application according to an invoke link of the widget information and fed back by the application, and display the widget information in the target position area.

13. A vehicle, comprising the display system according to any of claims 7 to 12.
